(19) Europäisches Patentamt / European Patent Office / Office européen des brevets

(11) **EP 3 663 938 B1**

(12) **EUROPEAN PATENT SPECIFICATION**

(45) Date of publication and mention
of the grant of the patent:
**26.10.2022 Bulletin 2022/43**

(21) Application number: **18896420.9**

(22) Date of filing: **09.08.2018**

(51) International Patent Classification (IPC):
**G06F 17/16** *(2006.01)* **G06N 3/04** *(2006.01)*

(52) Cooperative Patent Classification (CPC):
**G06N 3/0454; G06F 17/16; G06N 3/063**

(86) International application number:
**PCT/CN2018/099733**

(87) International publication number:
**WO 2019/128248 (04.07.2019 Gazette 2019/27)**

(54) **SIGNAL PROCESSING METHOD AND APPARATUS**

SIGNALVERARBEITUNGSVERFAHREN UND -VORRICHTUNG

PROCÉDÉ ET APPAREIL DE TRAITEMENT DE SIGNAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2017 CN 201711481199**

(43) Date of publication of application:
**10.06.2020 Bulletin 2020/24**

(73) Proprietor: **Huawei Technologies Co., Ltd.
Guangdong 518129 (CN)**

(72) Inventors:
• **XU, Ruosheng
Shenzhen, Guangdong 518129 (CN)**
• **CHEN, Jingwei
Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
WO-A1-2017/051358 CN-A- 104 170 274
CN-A- 106 127 297 CN-A- 107 239 824
US-A1- 2016 062 947 US-A1- 2017 103 040

• Sharan Chetlur ET AL: "cuDNN: efficient primitives for deep learning", arXiv:1410.0759v3, 18 October 2014 (2014-10-18), XP055260407, Retrieved from the Internet: URL:http://arxiv.org/abs/1410.0759v3 [retrieved on 2016-03-22]
• QIANG LAN ET AL: "High Performance Implementation of 3D Convolutional Neural Networks on a GPU", COMPUTATIONAL INTELLIGENCE AND NEUROSCIENCE, vol. 2017, 8 November 2017 (2017-11-08), pages 1-8, XP055568904, US ISSN: 1687-5265, DOI: 10.1155/2017/8348671
• WANG TIANQI ET AL: "Deep learning for wireless physical layer: Opportunities and challenges", CHINA COMMUNICATIONS, CHINA INSTITUTE OF COMMUNICATIONS, PISCATAWAY, NJ, USA, vol. 14, no. 11, 1 November 2017 (2017-11-01), pages 92-111, XP011674722, ISSN: 1673-5447, DOI: 10.1109/CC.2017.8233654 [retrieved on 2017-12-21]

**Description**

**TECHNICAL FIELD**

The present invention relates to the field of computer technologies, and in particular, to a signal processing method and apparatus.

**BACKGROUND**

A neural network (NN) is a network structure in which information is processed through emulating a behavior feature of an animal neural network. In the structure, including a large quantity of nodes (or referred to as neurons) connected to each other, input information is learned and trained based on a specific operation model for information processing. The neural network includes an input layer, a hidden layer, and an output layer. The input layer is responsible for receiving an input signal, the output layer is responsible for outputting a calculation result of the neural network, and the hidden layer is responsible for calculation processes such as learning and training, and is a memory unit of the network. A memory function of the hidden layer is represented by a weight matrix. Usually, each neuron corresponds to one weight coefficient.

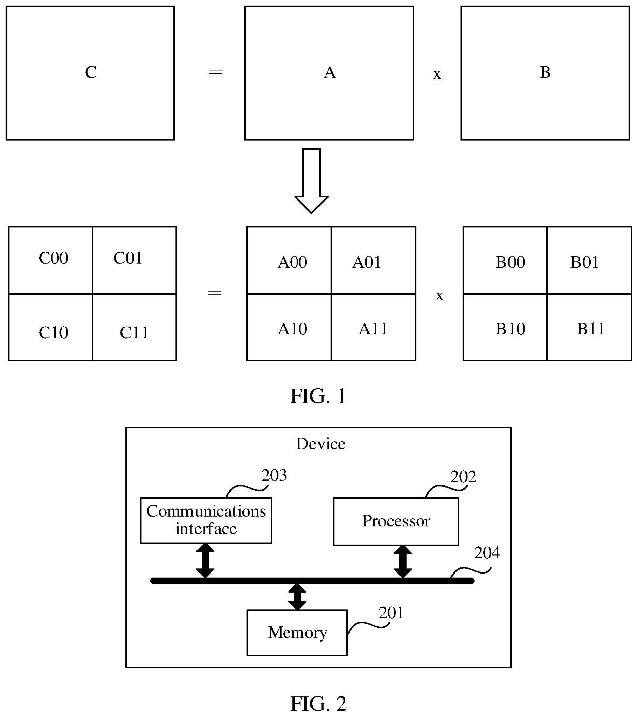

A convolutional neural network (CNN) is a multilayer neural network. Each layer includes a plurality of two-dimensional maps, and each map includes a plurality of independent neurons. The plurality of neurons of each map share a weight, and a quantity of parameters in the neural network may be reduced through weight sharing. Currently, in the convolutional neural network, according to a convolution operation performed by a processor, convolution of an input signal feature and a weight is usually converted into a matrix multiplication operation between a signal matrix and a weight matrix. During a specific matrix multiplication operation, usually, fractional processing is performed on the signal matrix and the weight matrix based on a condition |row - columns| ≤ 1 (to be specific, an absolute value of a difference between a row quantity and a column quantity of a matrix is less than or equal to 1), to obtain a plurality of fractional signal matrices and a plurality of fractional weight matrices that approximate to a square shape, and then matrix multiplication and accumulation operation is performed on the plurality of fractional signal matrices and the plurality of fractional weight matrices. For example, as shown in FIG. 1, it is assumed that C = AB, A is the signal matrix, and B is the weight matrix. When the matrix multiplication operation is performed, because the processor may lack a capability of performing calculation on such large matrices: the matrix A and the matrix B, or a cost of performing such calculation is relatively high, the matrix A may be divided into A00, A01, A10, and A11 based on a condition, and the matrix B may be divided into B00, B01, B10, and B11 based on the condition. Correspondingly, a matrix C may be formed by four matrix blocks C00, C01, C10, and C11. A relationship between each matrix block in the matrix C, a fractional signal matrix, and a fractional weight matrix may be shown in the following formulas:

$$C00 = A00B00 + A01B10$$

$$C01 = A00B01 + A01B11$$

$$C10 = A10B00 + A11B10$$

$$C11 = A10B01 + A11B11$$

In the foregoing method, when each matrix block in the matrix C is calculated, calculation may be performed in a data reusing manner to reduce power consumption. For example, during calculation of C00 and C01, data A00 is reused, so that power consumption overheads caused by reading the data A00 are reduced. However, fractional processing is performed on the signal matrix and the weight matrix based on the condition |row - columns| ≤ 1, shapes of an obtained fractional signal matrix and an obtained fractional weight matrix are fixed, and power consumption is also fixed. Therefore, design flexibility is insufficient.

The prior art documents "Sharan Chetlur ET AL: "cuDNN: efficient primitives for deep learning", arXiv:1410.0759v3, 18 October 2014 (2014-10-18), XP055260407, URL: //arxiv.org/abs/1410.0759v3 [retrieved on 2016-03-22] and US 2016/062947 A1 both relate to a convolutional neural network in which filter coefficients are multiplied with signal samples (image data) contained in a filter matrix and a signal matrix, respectively. The signal matrix and the image matrices are subdivided into square fractional matrices.

## SUMMARY

The object of the present invention is to provide a signal processing method and apparatus, to improve flexibility of a fractional matrix. This object is solved by the attached independent claims and further advantageous embodiments and improvements of the present invention are listed in the dependent claims. Hereinafter, before coming to a detailed description of the invention with reference to its advantageous embodiments and the attached drawings, aspects of the invention are described which contribute to the understanding of the invention. However, it should be noted that the invention is defined by the attached claims and any aspects and examples which are not covered by these claims should also be understood to merely contribute to the understanding of the invention.

The present invention comprises the following aspects:
According a first aspect, a signal processing method is provided, and the method is applied to a device including a processor. The method includes: obtaining a signal matrix and a weight matrix, where the signal matrix is a two-dimensional matrix and includes a plurality of signals that are capable of being processed by a computer, the weight matrix is a two-dimensional matrix and includes a plurality of weight coefficients, and a column quantity of the signal matrix is equal to a row quantity of the weight matrix; dividing the signal matrix to obtain a plurality of first fractional signal matrices of X rows and H columns, and dividing the weight matrix to obtain a plurality of first fractional weight matrices of H rows and Y columns, where neither the first fractional signal matrices nor the first fractional weight matrices approximate to a square shape; and performing matrix multiplication and accumulation operation on the plurality of first fractional signal matrices and the plurality of first fractional weight matrices, to obtain a plurality of matrix operation results, where the plurality of matrix operation results are used to form a signal processing result, each matrix operation result includes accumulation of a plurality of matrix multiplication results, and each matrix multiplication result is obtained by performing a matrix multiplication operation on one first fractional signal matrix and one first fractional weight matrix. Optionally, the method further includes: outputting the signal processing result, where the signal processing result includes the plurality of matrix operation results.

In the foregoing technical solution, when obtaining the signal matrix and the weight matrix, the processor divides the signal matrix and the weight matrix to obtain the plurality of first fractional signal matrices of X rows and H columns and the plurality of first fractional weight matrices of H rows and Y columns. Neither the first fractional signal matrices nor the first fractional weight matrices approximate to a square shape. Therefore, flexibility of a fractional matrix is improved to optimize design of power consumption.

In a possible implementation of the first aspect, that a matrix does not approximate to a square includes: An absolute value of a difference between a row quantity and a column quantity of the matrix is greater than or equal to 2. In other words, an absolute value of a difference between a row quantity and a column quantity of the first fractional signal matrix and the first fractional weight matrix is greater than or equal to 2.

In a possible implementation of the first aspect, the processor includes a first buffer and a second buffer. The dividing the signal matrix to obtain a plurality of first fractional signal matrices of X rows and H columns, and dividing the weight matrix to obtain a plurality of first fractional weight matrices of H rows and Y columns includes: reading the plurality of first fractional signal matrices of X rows and H columns from the signal matrix for a plurality of times by using the first buffer; and reading the first fractional weight matrices of H rows and Y columns from the weight matrix for a plurality of times by using the second buffer. In the foregoing possible technical solution, the processor may read, by using the first buffer, the first fractional signal matrix that does not approximate to a square shape, and read, by using the second buffer, the first fractional weight matrix that does not approximate to square, so that flexibility of reading a fractional matrix by using the first buffer and the second buffer can be provided.

In a possible implementation of the first aspect, the processor further includes a third buffer, and the method further includes: writing a matrix multiplication result or accumulation of at least two matrix multiplication results into the third buffer.

In a possible implementation of the first aspect, that one matrix multiplication result is obtained by performing a matrix multiplication operation on one first fractional signal matrix and one first fractional weight matrix includes: dividing the first fractional signal matrix to obtain a plurality of second fractional signal matrices of x rows and h columns; dividing the first fractional weight matrix to obtain a plurality of second fractional weight matrices of h rows and y columns, where neither the second fractional signal matrices nor the second fractional weight matrices approximate to a square shape; and performing matrix multiplication and accumulation operation on the plurality of second fractional signal matrices and the plurality of second fractional weight matrices, to obtain a plurality of matrix operation results. In the foregoing possible technical solution, when the processor cannot perform a matrix multiplication operation between one first fractional signal matrix and one first fractional weight matrix at a time, the first fractional signal matrix and the first fractional weight matrix each may be further divided into a plurality of smaller second fractional signal matrices and a plurality of smaller second weight matrices that do not approximate to a square shape. Matrix multiplication and accumulation operation is performed on the plurality of second fractional signal matrices and the plurality of second weight matrices, so that flexibility of dividing a fractional matrix can be further improved.

According a second aspect, a signal processing apparatus is provided, and apparatus includes: an obtaining unit, configured to obtain a signal matrix and a weight matrix, where the signal matrix is a two-dimensional matrix and includes a plurality of signals that are capable of being processed by a computer, the weight matrix is a two-dimensional matrix and includes a plurality of weight coefficients, and a column quantity of the signal matrix is equal to a row quantity of the weight matrix; and a processing unit, configured to: divide the signal matrix to obtain a plurality of first fractional signal matrices of X rows and H columns, and divide the weight matrix to obtain a plurality of first fractional weight matrices of H rows and Y columns, where neither the first fractional signal matrices nor the first fractional weight matrices approximate to a square shape; and perform matrix multiplication and accumulation operation on the plurality of first fractional signal matrices and the plurality of first fractional weight matrices, to obtain a plurality of matrix operation results, where the plurality of matrix operation results are used to form a signal processing result, each matrix operation result includes accumulation of a plurality of matrix multiplication results, and each matrix multiplication result is obtained by performing a matrix multiplication operation on one first fractional signal matrix and one first fractional weight matrix. Optionally, the apparatus further includes an output unit, configured to output the signal processing result, and the signal processing result includes the plurality of matrix operation results.

In a possible implementation of the second aspect, that a matrix does not approximate to a square shape includes: An absolute value of a difference between a row quantity and a column quantity of the matrix is greater than or equal to 2.

In a possible implementation of the second aspect, the processing unit includes a first buffer and a second buffer. The processing unit is specifically configured to read the plurality of first fractional signal matrices of X rows and H columns from the signal matrix for a plurality of times by using the first buffer, and read the plurality of first fractional weight matrices of H rows and Y columns from the weight matrix for a plurality of times by using the second buffer.

In a possible implementation of the second aspect, the processing unit further includes a third buffer, and the processing unit is further configured to write a matrix multiplication operation result or accumulation of at least two matrix multiplication operation results into the third buffer.

In a possible implementation of the second aspect, for performing a matrix multiplication operation on one first fractional signal matrix and one first fractional weight matrix, the processor is further configured to: divide the first fractional signal matrix to obtain a plurality of second fractional signal matrices of x rows and h columns; divide the first fractional weight matrix to obtain a plurality of second fractional weight matrices of h rows and y columns, where neither the second fractional signal matrices nor the second fractional weight matrices approximate to a square shape; and perform matrix multiplication and accumulation operation on the plurality of second fractional signal matrices and the plurality of second fractional weight matrices, to obtain a plurality of matrix operation results.

According a third aspect, a signal processing apparatus is provided, and apparatus includes: an input interface, configured to obtain a signal matrix and a weight matrix, where the signal matrix is a two-dimensional matrix, the weight matrix is a two-dimensional matrix and includes a plurality of weight coefficients, and a column quantity of the signal matrix is equal to a row quantity of the weight matrix; and a processor, configured to process the following operations: dividing the signal matrix to obtain a plurality of first fractional signal matrices of X rows and H columns, and dividing the weight matrix to obtain a plurality of first fractional weight matrices of H rows and Y columns, where neither the first fractional signal matrices nor the first fractional weight matrices approximate to a square shape; and performing matrix multiplication and accumulation operation on the plurality of first fractional signal matrices and the plurality of first fractional weight matrices, to obtain a plurality of matrix operation results, where the plurality of matrix operation results are used to form a signal processing result, each matrix operation result includes accumulation of a plurality of matrix multiplication results, and each matrix multiplication result is obtained by performing a matrix multiplication operation on one first fractional signal matrix and one first fractional weight matrix. Optionally, the apparatus further includes an output interface, configured to output the signal processing result, and the signal processing result includes the plurality of matrix operation results.

In a possible implementation of the third aspect, that a matrix does not approximate to a square shape includes: An absolute value of a difference between a row quantity and a column quantity of the matrix is greater than or equal to 2.

In a possible implementation of the third aspect, the processor includes a first buffer and a second buffer. The processor further performs the following operations: reading the plurality of first fractional signal matrices of X rows and H columns from the signal matrix for a plurality of times by using the first buffer, and reading the plurality of first fractional weight matrices of H rows and Y columns from the weight matrix for a plurality of times by using the second buffer.

In a possible implementation of the third aspect, the processor further includes a third buffer, and the processor further performs the following operation: writing a matrix multiplication result or accumulation of at least two matrix multiplication results into the third buffer.

In a possible implementation of the third aspect, for performing a matrix multiplication operation on one first fractional signal matrix and one first fractional weight matrix, the processor further performs the following operations: dividing the first fractional signal matrix to obtain a plurality of second fractional signal matrices of x rows and h columns; dividing the first fractional weight matrix to obtain a plurality of second fractional weight matrices of h rows and y columns, where neither the second fractional signal matrices nor the second fractional weight matrices approximate to a square shape; and performing matrix multiplication and accumulation operation on the plurality of second fractional signal matrices and the plurality of second fractional weight matrices, to obtain a plurality of matrix operation results.

Another aspect of this application provides a computer readable storage medium. The computer readable storage medium stores an instruction, and when the instruction is run on a computer, the computer is enabled to perform the signal processing method provided in the first aspect or any one of the possible implementations of the first aspect.

Another aspect of this application provides a computer program product including an instruction. When the instruction is run on a computer, the computer is enabled to perform the signal processing method provided in the first aspect or any one of the possible implementations of the first aspect.

Another aspect of this application provides a processor, and the processor is configured to: obtain a signal matrix and a weight matrix, where the signal matrix is a two-dimensional matrix and includes a plurality of signals that are capable of being processed by a computer, the weight matrix is a two-dimensional matrix and includes a plurality of weight coefficients, and a column quantity of the signal matrix is equal to a row quantity of the weight matrix; divide the signal matrix to obtain a plurality of first fractional signal matrices of X rows and H columns, and divide the weight matrix to obtain a plurality of first fractional weight matrices of H rows and Y columns, where neither the first fractional signal matrices nor the first fractional weight matrices approximate to a square shape; and perform matrix multiplication and accumulation operation on the plurality of first fractional signal matrices and the plurality of first fractional weight matrices, to obtain a plurality of matrix operation results, where the plurality of matrix operation results are used to form a signal processing result, each matrix operation result includes accumulation of a plurality of matrix multiplication results, and each matrix multiplication result is obtained by performing a matrix multiplication operation on one first fractional signal matrix and one first fractional weight matrix.

In a possible implementation, that a matrix does not approximate to a square shape includes: An absolute value of a difference between a row quantity and a column quantity of the matrix is greater than or equal to 2.

In a possible implementation, the processor includes a first buffer and a second buffer. The processor further performs the following operations: reading the plurality of first fractional signal matrices of X rows and H columns from the signal matrix for a plurality of times by using the first buffer, and reading the plurality of first fractional weight matrices of H rows and Y columns from the weight matrix for a plurality of times by using the second buffer.

In a possible implementation, the processor further includes a third buffer, and the processor further performs the following operation: writing a matrix multiplication result or accumulation of at least two matrix multiplication results into the third buffer.

In a possible implementation, the processor further performs the following operations: dividing the first fractional signal matrix to obtain a plurality of second fractional signal matrices of x rows and h columns; dividing the first fractional weight matrix to obtain a plurality of second fractional weight matrices of h rows and y columns, where neither the second fractional signal matrices nor the second fractional weight matrices approximate to a square shape; and performing matrix multiplication and accumulation operation on the plurality of second fractional signal matrices and the plurality of second fractional weight matrices, to obtain a plurality of matrix operation results.

In a possible implementation, the processor includes a calculation unit configured to perform the previous calculation processing. Optionally, the calculation unit includes a multiply-accumulate unit. The multiply-accumulate unit is hardware configured to perform a multiply-accumulate operation.

It may be understood that any one of an information processing apparatus, a computer storage medium, and a computer program product provided above is configured to perform the corresponding method provided above. Therefore, for beneficial effects that can be achieved by the apparatus, the computer storage medium, or the computer program product, refer to beneficial effects of the corresponding method provided above. Details are not described herein again.

## BRIEF DESCRIPTION OF DRAWINGS

FIG. 1 is a schematic diagram of dividing a matrix;
FIG. 2 is a schematic structural diagram of a device according to an embodiment of the present invention;
FIG. 3 is a schematic structural diagram of a neural network according to an embodiment of the present invention;
FIG. 4 is a schematic structural diagram of a fully connected neural network according to an embodiment of the present invention;
FIG. 5 is a schematic structural diagram of a convolutional neural network according to an embodiment of the present invention;
FIG. 6 is a schematic diagram of a convolution operation according to an embodiment of the present invention;
FIG. 7 is a schematic flowchart of a signal processing method according to an embodiment of the present invention;
FIG. 8 is a schematic diagram of matrix dividing according to an embodiment of the present invention;

FIG. 9 is a schematic diagram of a first fractional signal matrix according to an embodiment of the present invention;

FIG. 10 is a schematic structural diagram of a processor according to an embodiment of the present invention;

FIG. 11 is a schematic structural diagram of another processor according to an embodiment of the present invention; and

FIG. 12 is a schematic structural diagram of a signal processing apparatus according to an embodiment of the present invention.

## DESCRIPTION OF EMBODIMENTS

FIG. 2 is a schematic structural diagram of a device according to an embodiment of this application. Referring to FIG. 2, the device may include a memory 201, a processor 202, a communications interface 203, and a bus 204. The memory 201, the processor 202, and the communications interface 203 are interconnected by using the bus 204. The memory 201 may be configured to store data, a software program, and a module, and mainly includes a program storage area and a data storage area. The program storage area may store an operating system, an application program required for at least one function, and the like. The data storage area may store data created during use of the device, and the like. The processor 202 is configured to control and manage an action of the device, for example, perform various functions of the device and process data by running or executing a software program and/or a module stored in the memory 201 and by invoking data stored in the memory 201. The communications interface 203 is configured to support communication of the device.

The processor 202 may be a central processing unit, a general purpose processor, a digital signal processor, an application-specific integrated circuit, a field programmable gate array or another programmable logic device, a transistor logic device, a hardware component, or any combination thereof. The processor 202 may implement or execute various example logic blocks, modules, and circuits described with reference to content disclosed in this application. Alternatively, the processor may be a combination for implementing a computing function, for example, a combination of one or more microprocessors, or a combination of a digital signal processor and a microprocessor. The bus 204 may be a peripheral component interconnect (PCI) bus, an extended industry standard architecture (EISA) bus, or the like. The bus may be classified into an address bus, a data bus, a control bus, and the like. For ease of representation, only one thick line is used to represent the bus 204 in FIG. 2, but this does not mean that there is only one bus or only one type of bus.

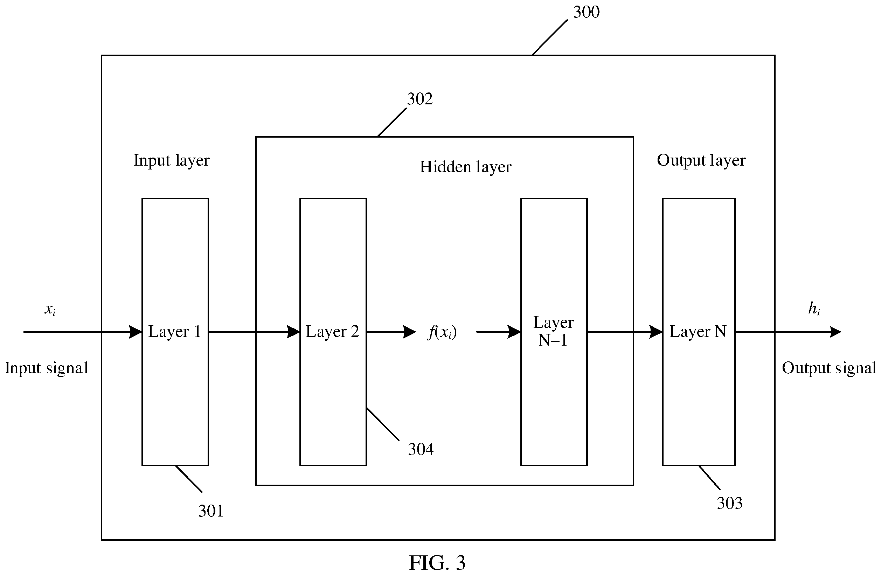

FIG. 3 is a schematic structural diagram of a neural network. The neural network 300 has N processing layers. $N \geq 3$, and N is a natural number. A first layer of the neural network is an input layer 301 that is responsible for receiving an input signal. A last layer of the neural network is an output layer 303 that outputs a processing result of the neural network. Layers other than the first layer and the last layer are intermediate layers 304. These intermediate layers jointly form a hidden layer 302. Each intermediate layer in the hidden layer may receive an input signal and output a signal, and the hidden layer is responsible for processing the input signal. Each layer represents a logical level of signal processing. Multi-level logical processing may be performed on a data signal by using a plurality of layers.

For ease of understanding, the following describes a processing principle of the neural network in this embodiment of this application. A processing function of the neural network is usually a non-linear function $f(x_i)$, for example, $f(x_i) = \max(0, x_i)$, and in some feasible embodiments, the processing function may be a rectified linear unit (ReLU), a hyperbolic tangent function (tanh), a sigmoid function (sigmoid), or the like. It is assumed that $(x_1, x_2, x_3)$ is a one-dimensional signal matrix, $(h_1, h_2, h_3)$ is an output signal matrix, $W_{ij}$ indicates a weight coefficient between an input $x_j$ and an output $h_i$, and a matrix constituted by the weight coefficient is a weight matrix. The weight matrix $W$ corresponding to the one-dimensional signal matrix and the output signal matrix is shown in a formula (1):

$$W = \begin{pmatrix} W_{11} & W_{12} & W_{13} \\ W_{21} & W_{22} & W_{23} \\ W_{31} & W_{32} & W_{33} \end{pmatrix} \quad (1)$$

A relationship between an input signal and an output signal is shown in a formula (2). $b_i$ is a bias value of a neural network processing function, and the bias value is used to adjust an input of the neural network to obtain an ideal output result.

$$h_1 = f\left(W_{11}x_1 + W_{12}x_2 + W_{13}x_3 + b_1\right)$$
$$h_2 = f\left(W_{21}x_1 + W_{22}x_2 + W_{23}x_3 + b_2\right)$$
$$h_3 = f\left(W_{31}x_1 + W_{32}x_2 + W_{33}x_3 + b_3\right) \tag{2}$$

In some feasible embodiments, the input signal of the neural network may be signals in various forms, such as a speech signal, a text signal, an image signal, or a temperature signal. The speech signal may be recorded by a recording device, received by a mobile phone or a fixed-line phone during a call, sent by a radio and received by a radio receiver, or the like. The text signal may be a TXT format signal, a Word format signal, a PDF format signal, or the like. The image signal may be a scenery signal shot by a camera, an image signal that is of a community environment and that is captured by a monitoring device, a face signal obtained by an access control system, or the like. The input signal of the neural network includes other various engineering signals that are capable of being processed by a computer, and examples are not listed one by one herein. The hidden layer 302 of the neural network may remove a mixed noise signal from the speech signal to enhance the speech signal, understand specific content in the text signal, recognize a face image signal, and the like.

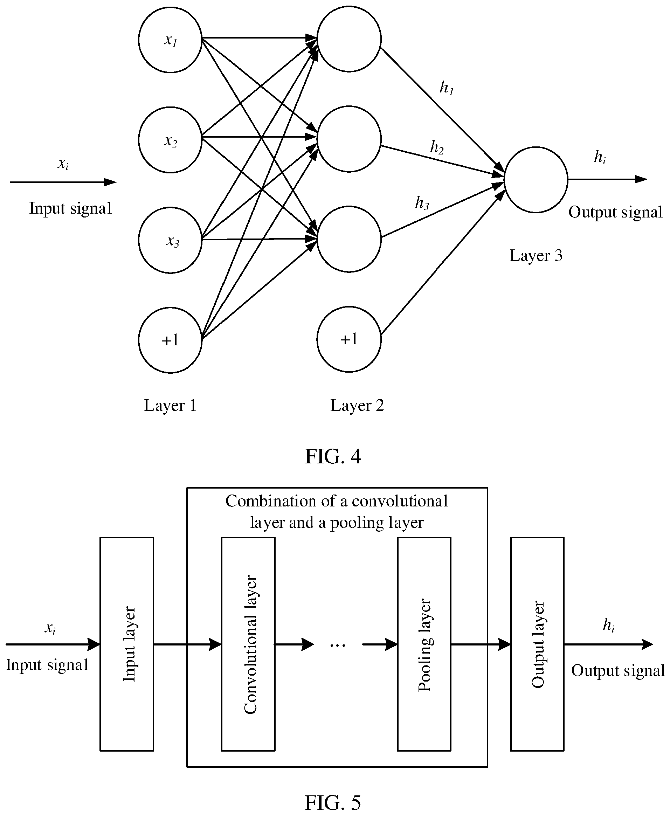

Each layer of the neural network may include a plurality of nodes, which may alternatively be referred to as neurons. In a fully connected neural network, neurons in adjacent layers are fully connected. In other words, all neurons in a previous layer are connected to each neuron in a layer after the previous layer. For example, FIG. 4 is a schematic structural diagram of a fully connected neural network including three layers. A layer 1 and a layer 2 each include four neurons, and a layer 3 includes one neuron. In FIG. 4, "+1" represents a bias neuron, and the bias neuron is used to adjust an input of each layer in the neural network. Because neurons in adjacent layers in a fully connected network are fully connected, when there are a relatively large quantity of intermediate layers in the fully connected neural network, dimensions of a signal matrix and a weight matrix in a deeper processing layer are very large, and consequently, a network size of the neural network is too large.

A convolutional neural network may perform moving filtering in an input signal space domain by using a relatively small parameter profile, to resolve a problem that a network size of the fully connected neural network is too large. A difference between the convolutional neural network and a common neural network lies in that the convolutional neural network includes a feature extractor including a convolutional layer and a sub-sampling layer. In the convolutional layer in the convolutional neural network, one neuron is connected only to some adjacent-layer neurons. One convolutional layer in the convolutional neural network usually includes several feature maps. Each feature map includes some neurons arranged in a rectangular form. Neurons of a same feature map share a weight, and the shared weight is a convolution kernel. The convolution kernel is usually initialized in a form of a random decimal matrix. In a network training process, the convolution kernel is trained to obtain an appropriate weight. A direct advantage brought by the convolution kernel is reducing connections between layers in a network. Sub-sampling is also referred to as pooling, and may be considered as a special convolution process. Convolution and the sub-sampling greatly simplify model complexity, and reduce model parameters. As shown in FIG. 5, the convolutional neural network includes three parts. A first part is an input layer. A second part includes a combination of a plurality of convolutional layers and a plurality of pooling layers. A third part is an output layer, and the output layer may include one fully connected multilayer perceptron classifier.

The convolutional layer in the convolutional neural network may be configured to perform a convolution operation on an input signal array and a weight array. Specifically, a one-dimensional input signal is used as an example herein. It is assumed that an input signal is $f(u)$, $u = 0 \sim N -1$, the convolution kernel is $h(v)$, $v = 0 \sim n -1$, $n \le N$, and a convolution operation may be described by using the following formula (3).

$$y(i) = \sum_{u=0}^{N-1} f(u)h(i-u), \, i = 0 \sim N + n - 1 \tag{3}$$

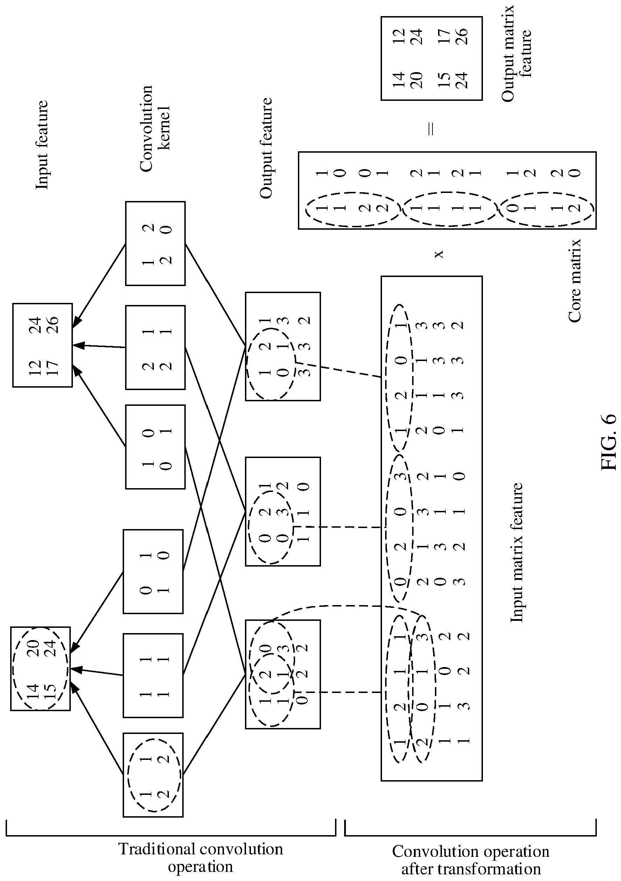

The convolutional neural network may be widely applied to speech recognition, facial recognition, general object recognition, motion analysis, image processing, and the like. For example, an input signal is a two-dimensional matrix. As shown in FIG. 6, it is assumed that an input feature corresponding to the image in a convolutional layer includes three signal matrices of three rows and three columns, and a convolution kernel includes six weight matrices of two rows and two columns. FIG. 6 shows two specific operation manners of performing a convolution operation in the convolutional neural network. One is a traditional convolution operation, and the other is a convolution operation after matrix transformation. According to the traditional convolution operation, a matrix multiplication operation is performed on each signal matrix and a weight matrix corresponding to the signal matrix, and corresponding results of the matrix multiplication operation are accumulated, to obtain two output signal matrices, namely, output features. According to the other convolution operation after matrix transformation, transformation is performed on different signal matrices to obtain an input feature matrix that includes the three signal matrices and whose matrix dimension is relatively large. Similarly, a corresponding transformation operation is also performed on the six weight matrices to obtain a core matrix that includes the six weight matrices and whose matrix dimension is relatively large. Then, a matrix multiplication operation is performed on the input feature matrix and the core matrix that are obtained through transformation, to obtain an output feature matrix.

Matrix transformation is performed on the signal matrix and the weight matrix, so that a quantity of matrix multiplication operations can be reduced, and overheads of reading the signal matrix and the weight matrix are reduced. However, computation overheads required for a matrix multiplication operation after transformation are relatively high. Therefore, the signal matrix and the weight matrix need to be divided into relatively small fractional matrices, and a corresponding result is obtained by multiplying the fractional matrices. In other words, multiplication of a large matrix is changed into multiplication and accumulation of a plurality of fractional matrices.

For ease of understanding, the following describes a specific signal processing method in an embodiment of this application. The signal processing method may be performed in any intermediate layer of a hidden layer in a neural network. Optionally, the neural network may be a fully connected neural network, and the intermediate layer may also be referred to as a fully connected layer. Alternatively, the neural network may be a convolutional neural network, and processing performed in the intermediate layer may be specifically performed in a convolutional layer in the convolutional neural network.

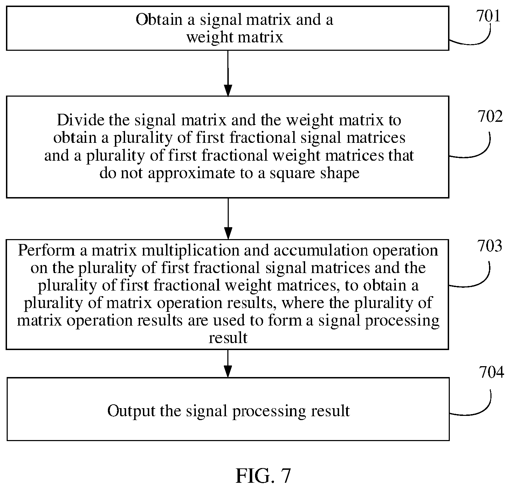

FIG. 7 is a schematic flowchart of a signal processing method according to an embodiment of this application. The method may be performed by a device, specifically may be performed by a unit having a computing function in the device, for example, a neural network processor. The method includes the following steps.

Step 701: Obtain a signal matrix and a weight matrix, where a column quantity of the signal matrix is equal to a row quantity of the weight matrix.

The signal matrix may come from an input layer of a neural network or an intermediate layer in front of an intermediate layer in which signal processing is performed. The input signal may be various signals that may be collected and processed, such as a speech signal, a text signal, an image signal, and a temperature signal. The matrix may be a matrix on which matrix transformation is not performed, or may be a matrix on which the matrix transformation is performed. The signal matrix may be a two-dimensional matrix of M rows and K columns, and the matrix includes a plurality of signals that are capable of being processed by a computer. In other words, each element corresponds to one signal. When the signal matrix is a transformed matrix, the signal matrix before transformation may be a one-dimensional column vector, a one-dimensional row vector, a two-dimensional matrix (for example, a grayscale image), a three-dimensional matrix (for example, an RGB color image), or the like. This is not specifically limited in this embodiment of this application.

In addition, the weight matrix includes weight coefficients, and the weight matrix may be defined by the neural network. The weight coefficient is applied to the input signal. An input signal corresponding to a large weight coefficient is strengthened in a learning and training process of the neural network, and an input signal corresponding to a small weight coefficient is weakened in the learning and training process. The weight matrix may be a matrix on which matrix transformation is not performed, or may be a matrix on which the matrix transformation is performed. In addition, the weight matrix is a two-dimensional weight matrix of K rows and N columns.

Step 702: Divide the signal matrix to obtain a plurality of first fractional signal matrices of X rows and H columns, and divide the weight matrix to obtain a plurality of first fractional weight matrices of H rows and Y columns, where there is a correspondence between the plurality of first fractional signal matrices and the plurality of first fractional weight matrices, and neither the first fractional signal matrices nor the first fractional weight matrices approximate to a square shape.

Both the original signal matrix and the original weight matrix usually have a relatively large dimension, and a processor cannot directly perform calculation on a large-dimension matrix. Therefore, the signal matrix and the weight matrix need to be divided. Dividing a matrix means dividing the matrix into a plurality of sub-blocks, and each sub-block may be referred to as a fractional matrix. A quantity of the plurality of first fractional signal matrices obtained through dividing is equal to a quantity of the plurality of first fractional weight matrices obtained through dividing, and there is the correspondence between the plurality of first fractional signal matrices and the plurality of first fractional weight matrices. The correspondence may be a one-to-many relationship, a many-to-one relationship, or a many-to-many relationship. In other words, one first fractional signal matrix may correspond to a plurality of first fractional weight matrices, or a plurality of first fractional signal matrices correspond to one first fractional weight matrix, or a plurality of first fractional signal matrices correspond to a plurality of first fractional weight matrices.

In addition, both a column quantity of the first fractional signal matrix and a row quantity of the first fractional weight matrix are H. To be specific, one first fractional signal matrix and a first fractional weight matrix corresponding to the first fractional signal matrix meet a matrix multiplication rule. According to the matrix multiplication rule, a column quantity of the first matrix in matrix multiplication is equal to a row quantity of the second matrix in the matrix multiplication.

X, H and Y are related to a row quantity and a column quantity of the signal matrix and a row quantity and a column quantity of the weight matrix, and neither the first fractional signal matrix nor the first fractional weight matrix approximates to a square.

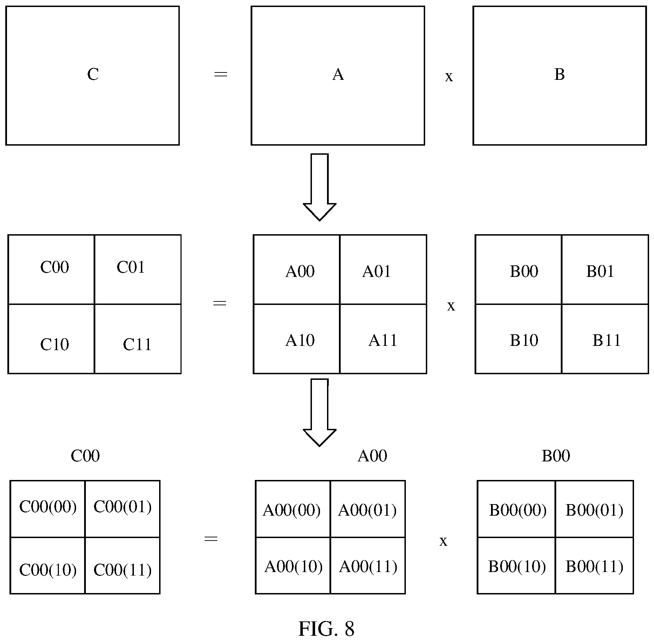

FIG. 8 is a schematic diagram of matrix dividing. It is assumed that the signal matrix is A, the weight matrix is B, and a matrix is C = AB. For example, the signal matrix A is divided into four first fractional signal matrices that are respectively represented as A00, A01, A10, and A11, and the weight matrix B is divided into four first fractional weight matrices that are respectively represented as B00, B01, B10, and B11. A00, A01, A10, and A11 are used as an example. First fractional weight matrices respectively corresponding to A00 and A10 include B00 and B01, and first fractional weight matrices respectively corresponding to A01 and A11 include B01 and B10. The matrix C may include four matrices C00, C01, C10, and C11. A relationship between each component matrix in the matrix C and the first fractional signal matrix and the first fractional weight matrix may be shown in the following formula (4).

$$C00 = A00B00 + A01B10$$
$$C01 = A00B01 + A01B11$$
$$C10 = A10B00 + A11B10$$
$$C11 = A10B01 + A11B11 \qquad (4)$$

In the formula (4), calculation of each matrix block of the matrix C may be performed in two steps. For example, C00 is used as an example, and calculation may be performed according to the following steps (I) and (II). Data is repeatedly used, so that data read/write operations can be reduced, a bandwidth requirement of a processor can be reduced, and read/write power consumption of a memory can be reduced.

$$C00\_temp = A00B00 \qquad (I)$$

$$C00\_temp = C00\_temp + A01B10 \qquad (II)$$

Alternatively, in the formula (4), the calculation in the matrix C is performed according to the example in the following steps (i) and (ii). In this case, the processor needs to obtain A00 only once. This reduces power consumption of the processor in reading/writing the memory by reusing a matrix A00.

$$C00\_temp = A00B00 \qquad (i)$$

$$C01\_temp = A00B01 \qquad (ii)$$

In this embodiment of this application, in a matrix multiplication operation between the signal matrix and the weight matrix, the processor divides the signal matrix into the plurality of first fractional signal matrices of X rows and H columns, and divides the weight matrix into the plurality of first fractional weight matrices of H rows and Y columns. Neither the first fractional signal matrices nor the first fractional weight matrices approximate to a square shape. Therefore, fractional matrices are more flexible. In addition, when matrix multiplication and accumulation operation is performed on the plurality of first fractional signal matrices and the plurality of first fractional weight matrices, an optimal design of the matrix multiplication operation between the signal matrix and the weight matrix performed by the processor may be implemented based on read/write power consumption of different data.

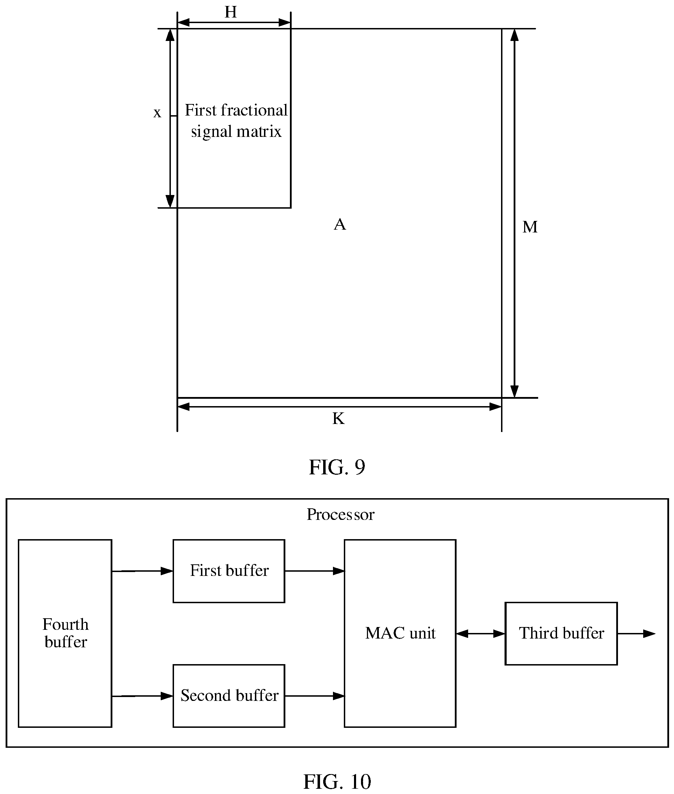

Optionally, that a matrix does not approximate to a square shape includes: An absolute value of a difference between a row quantity and a column quantity of the matrix is greater than or equal to 2. To be specific, a row quantity X and a column quantity H of the first fractional signal matrix meet $|X - H| \geq 2$, and a row quantity H and a column quantity Y of the first fractional weight matrix meet $|X - Y| \geq 2$. In other words, the first fractional signal matrix and the first fractional weight matrix each may be a rectangular matrix in which a difference between a row quantity and a column quantity is greater than or equal to 2. In other words, neither the first fractional signal matrix nor the first fractional weight matrix approximates to a square. For example, it is assumed that the signal matrix A is an M x K matrix, and the weight matrix B is a K x N matrix. X, H, and Y are related to M, K, and N. The row quantity X and the column quantity H of the first fractional signal matrix may be shown in FIG. 9.

Step 703: Perform matrix multiplication and accumulation operation on the plurality of first fractional signal matrices and the plurality of first fractional weight matrices, to obtain a plurality of matrix operation results, where the plurality of matrix operation results are used to form a signal processing result, each matrix operation result includes a plurality of matrix multiplication results, and each matrix multiplication result is obtained by performing a matrix multiplication operation on one first fractional signal matrix and one first fractional weight matrix.

According to the foregoing description, the quantity of the plurality of first fractional signal matrices may be equal or unequal to the quantity of the plurality of first fractional weight matrices. There may be the correspondence between the plurality of first fractional signal matrices and the plurality of first fractional weight matrices. The first fractional signal matrix and the first fractional weight matrix meet the matrix multiplication rule. A matrix multiplication operation is performed on one first fractional matrix and one first weight matrix corresponding to the first fractional matrix, to obtain a matrix multiplication operation result. Therefore, based on the correspondence between the plurality of first fractional signal matrices and the plurality of first fractional weight matrices, matrix multiplication and accumulation operation is performed on the plurality of first fractional signal matrices and the plurality of first fractional weight matrices. An output matrix including a plurality of matrix multiplication operation results may be obtained in the foregoing calculation process. One matrix operation result includes accumulation of a plurality of matrix multiplication results, and each matrix multiplication operation result may include a plurality of output signals that are capable of being processed by a computer.

It should be noted that, if each first fractional signal matrix is considered as one element and each first fractional weight matrix is considered as one element, a calculation manner of the matrix multiply-accumulate operation performed on the plurality of first fractional signal matrices and the plurality of first fractional weight matrices is similar to that of a multiplication operation performed on two matrices each including a plurality of elements.

For ease of understanding, the formula (4) is used as an example for description herein. In the formula (4), the matrix C may be referred to as an output matrix, C00, C01, C10, and C11 are referred to as matrix operation results, and the output matrix C includes four matrix operation results. C00 is used as an example. A product of A00 and B00 is a matrix multiplication result, and a product of A01 and B10 is also a matrix multiplication result. Both the two matrix multiplication results correspond to a C00 location in the output matrix C. To be specific, accumulation of the two matrix multiplication results is referred to as a matrix multiplication operation result.

Step 704: Output the signal processing result, where the signal processing result includes the plurality of matrix operation results.

After obtaining the plurality of matrix multiplication operation results, the processor may further output the signal processing result, and the signal processing result includes the plurality of matrix operation results. An output matrix formed by the plurality of matrix operation results may be a two-dimensional matrix (for example, a grayscale image). An output signal corresponding to the output matrix may be various signals that are capable of being processed, played, or displayed, such as a speech signal, a text signal, an image signal, and a temperature signal that correspond to an input signal. Optionally, the signal processing result may be destined for an intermediate layer after the intermediate layer in which the signal processing is performed or an output layer of the neural network.

Further, as shown in FIG. 10, a processor may include a multiply accumulate (MAC) unit, a first buffer, a second buffer, and a third buffer. The MAC unit in the processor may directly interact with the first buffer, the second buffer, and the third buffer. The processor may further include a fourth buffer. When the first buffer is connected to the second buffer, the MAC unit may interact with the third buffer by using the first buffer and the second buffer. The MAC unit is configured to perform a specific multiply-accumulate operation, and the fourth buffer may be configured to store a signal matrix and a weight matrix. The first buffer may be configured to store a first fractional signal matrix of the signal matrix, and the second buffer may be configured to store a first fractional weight matrix of the weight matrix. The third buffer is configured to store a matrix multiplication result or accumulation of at least two matrix multiplication results, and the accumulation of at least two matrix multiplication results may be one matrix operation result.

For example, each unit in the foregoing processor may be circuit hardware, including but not being limited to one or more of a transistor, a logic gate, a basic operation unit, and the like. For another example, the signal matrix and the weight matrix may be matrices generated through calculation by the processor, or may be from a device other than the processor, for example, a hardware accelerator or another processor. The processor in this embodiment is configured to obtain the signal matrix and the weight matrix, and perform calculation according to the method in the foregoing embodiment. For a specific operation process of the processor in FIG. 10, refer to the foregoing method embodiment.

Specifically, that the signal matrix is divided to obtain a plurality of first fractional signal matrices of X rows and H columns includes: the MAC unit reads the first fractional signal matrix of X rows and H columns from the signal matrix for a plurality of times by using the first buffer, to obtain the plurality of first fractional signal matrices of X rows and H columns. The processor may read the first fractional signal matrix of X rows and H columns from the fourth buffer, and store the first fractional signal matrix of X rows and H columns into the first buffer. A capacity V1 of the first buffer may be fixed, and may be equal to a product of X and H, that is, $V1 = X \times H$. The first fractional signal matrix may fill the first buffer.

Specifically, that the weight matrix is divided to obtain a plurality of first fractional weight matrices of H rows and Y columns includes: the MAC unit reads the first fractional weight matrix of H rows and Y columns from the weight matrix for a plurality of times by using the second buffer, to obtain the plurality of first fractional weight matrices of H rows and Y columns. The processor may read the first fractional weight matrix of H rows and Y columns from the fourth buffer, and store the first fractional weight matrix of H rows and Y columns into the second buffer. A capacity V2 of the second buffer may be fixed, and may be equal to a product of H and Y, that is, V2 = H x Y. The first fractional weight matrix may fill the second buffer.

X is positively related to first read/write power consumption of the first buffer, Y is positively related to first read/write power consumption of the second buffer, and H is negatively related to each of the first read/write power consumption of the first buffer and that of the second buffer. That X is positively related to the first read/write power consumption of the first buffer means that larger X indicates greater first read/write power consumption of the first buffer, and smaller X indicates less first read/write power consumption of the first buffer. For example, X is proportional to the first read/write power consumption of the first buffer. That Y is positively related to the first read/write power consumption of the second buffer means that larger Y indicates greater first read/write power consumption of the second buffer, and smaller Y indicates less first read/write power consumption of the second buffer. For example, Y is proportional to the first read/write power consumption of the second buffer. That H is negatively related to the first read/write power consumption of the first buffer and that of the second buffer means that larger H indicates less first read/write power consumption of the first buffer and less first read/write power consumption of the second buffer, and smaller H indicates greater first read/write power consumption of the first buffer and greater first read/write power consumption of the second buffer. For example, H is inversely proportional to the first read/write power consumption of the first buffer and that of the second buffer.

For ease of understanding, matrix multiplication of one first fractional signal matrix and one first fractional weight matrix is used as an example herein. In a process in which the MAC unit reads the first fractional signal matrix of X rows and H columns and reads the first fractional weight matrix of H rows and Y columns, a relationship between each of X, Y, and H and read/write power consumption of the first buffer and that of the second buffer is described in detail.

When reading the first fractional signal matrix, the MAC unit needs to first read one first fractional signal matrix of X rows and H columns from the signal matrix stored in the fourth buffer by using the first buffer. To be specific, the first fractional signal matrix read from the fourth buffer is written into the first buffer, and then, the first fractional signal matrix is read from the first buffer. Similarly, when reading the first fractional weight matrix, the MAC unit needs to first read one first fractional weight matrix of H rows and Y columns from the weight matrix stored in the fourth buffer by using the second buffer. To be specific, the first fractional weight matrix read from the fourth buffer is written into the second buffer, and then, the first fractional weight matrix is read from the second buffer. Because each row in the first fractional signal matrix is multiplied by each column in the first fractional weight matrix in a matrix multiplication operation, when performing the matrix multiplication operation, the MAC unit needs to read X rows in the first fractional signal matrix from the first buffer through reading X times, and read Y columns in the first fractional weight matrix from the second buffer through reading Y times. It can be learned that, larger X indicates a larger quantity of read operations of the first buffer and greater first read/write power consumption of the first buffer, and smaller X indicates a smaller quantity of read operations of the first buffer and less first read/write power consumption of the first buffer. Therefore, X is positively related to the first read/write power consumption of the first buffer. Similarly, larger Y indicates a larger quantity of read operations of the second buffer and greater first read/write power consumption of the second buffer, and smaller Y indicates a smaller quantity of read operations of the second buffer and less first read/write power consumption of the second buffer. Therefore, Y is positively related to the first read/write power consumption of the second buffer.

Capacities of the first buffer and the second buffer are usually fixed. It is assumed that the capacity V1 = X x H of the first buffer is fixed, larger X indicates smaller H, and smaller X indicates larger H. Therefore, H is negatively related to the first read/write power consumption of the first buffer. It is assumed that the capacity V2 = H x Y of the second buffer is fixed, larger Y indicates smaller H, and smaller Y indicates larger H. Therefore, H is negatively related to the first read/write power consumption of the second buffer. Optionally, the capacity of the first buffer may be equal to the capacity of the second buffer. In other words, X x H = H x Y, and in this case, X is equal to Y.

Specifically, when the MAC unit performs the matrix multiplication operation, and the third buffer is configured to store the matrix multiplication result or the accumulation of at least two matrix multiplication results, the method may further include: the matrix multiplication result or the accumulation of at least two matrix multiplication results is written into the third buffer; and/or the matrix multiplication result or the accumulation of at least two matrix multiplication results are read from the third buffer.

X and Y each are negatively related to read/write power consumption of the third buffer, and H is positively related to the read/write power consumption of the third buffer. That X and Y each are negatively related to the read/write power consumption of the third buffer means that larger X and larger Y indicate less read/write power consumption of the third buffer, and smaller X and smaller Y indicate greater read/write power consumption of the third buffer. For example, X and Y are negatively related to the read/write power consumption of the third buffer.

For ease of understanding, matrix multiplication of one first fractional signal matrix and one first fractional weight matrix is used as an example herein. In a process in which the MAC unit performs a matrix multiplication operation on the first fractional signal matrix of X rows and H columns and the first fractional weight matrix of H rows and Y columns, a relationship between each of X, Y, and H and the read/write power consumption of the third buffer is described in detail.

According to the matrix multiplication operation, each row of the first fractional signal matrix is multiplied by each column of the first fractional weight matrix, to perform multiplication of a row and a column. Multiplication of a first row (the first row includes H row elements) of the first fractional signal matrix and a first column (the first column includes H column elements) of the first fractional weight matrix is used as an example. When performing a multiply-accumulate operation on the H row elements and the H column elements, the MAC unit first calculates a first product of a first row element and a first column element, and then writes the first product into the third buffer; then calculates a second product of a second row element and a second column element, then reads the first product from the third buffer, and writes accumulation of the first product and the second product into the third buffer. By analogy, a result of a multiply-accumulate operation performed on the H row elements and the H column elements is obtained through calculation.

It can be learned that, larger H indicates a larger quantity of read/write operations performed by the MAC unit on the third buffer and greater read/write power consumption of the third buffer; and smaller H indicates a smaller quantity of read/write operations performed by the MAC unit on the third buffer and less read/write power consumption of the third buffer. Therefore, H is negatively related to the read/write power consumption of the third buffer.

The capacities of the first buffer and the second buffer are usually fixed. In other words, V1 = X x H and V2 = H x Y are fixed. Therefore, larger H indicates smaller X and smaller Y, and smaller H indicates larger X and larger Y. Therefore, X and Y each are negatively related to the read/write power consumption of the third buffer, and H is positively related to the read/write power consumption of the third buffer.

It should be noted that in the foregoing, matrix multiplication of one first fractional signal matrix and one first fractional weight matrix is used as an example for description. In this case, for example, the third buffer may be configured to store a product of one row element and one column element, or accumulation of products. This does not constitute any limitation on this embodiment of this application. In a process in which the MAC unit performs matrix multiplication and accumulation operation on the plurality of first fractional signal matrices and the plurality of first fractional weight matrices, the third buffer is configured to store a matrix multiplication result or at least two matrix multiplication results.

In addition, the first read/write power consumption of the first buffer herein includes power consumption for writing a first fractional signal matrix into the first buffer, and power consumption for reading a first fractional signal matrix from the first buffer. The first read/write power consumption of the second buffer includes power consumption for writing a first fractional weight matrix into the second buffer, and power consumption for reading a first fractional weight matrix from the second buffer. The read/write power consumption of the third buffer includes power consumption for writing a matrix multiplication operation result or accumulation of at least two matrix multiplication operation results into the third buffer, and power consumption for reading the matrix multiplication operation result or the accumulation of at least two matrix multiplication operation results from the third buffer.

For example, matrix dividing shown in FIG. 8 is used as an example. When determining C00 according to step (I) and step (II), the processor may store a matrix multiplication result $C00\_temp$ in the third buffer after step (I). After a second matrix multiplication result is obtained by performing a matrix multiplication operation on A01 and B01, the processor may read $C00\_temp$ from the third buffer, accumulate $C00\_temp$ and the second matrix multiplication result to obtain a matrix operation result C00, and store C00 in the third buffer.

Further, if dimensions of an obtained first fractional signal matrix and an obtained first fractional weight matrix are still relatively large, the processor cannot complete calculating one first fractional signal matrix and one first fractional weight matrix at a time, and may further divide the first fractional signal matrix and the first fractional weight matrix to obtain a granularity that can be processed by the processor.

For example, the matrix dividing shown in FIG. 8 is used as an example. If granularities of A00, A01, A10, A11, B00, B01, B10, and B11 obtained after division are still relatively large, for example, the processor cannot complete calculation in step (I) or step (II), the calculation in step (I) is used as an example, and the processor may further explain the formula (4) into the following formula (5):

$$
\begin{aligned}
C00(00) &= A00(00)B00(00) + A00(01)B00(10) \\
C00(01) &= A00(00)B00(01) + A00(01)B00(11) \\
C00(10) &= A00(10)B00(00) + A00(11)B00(10) \\
C00(11) &= A00(10)B00(01) + A00(11)B00(11)
\end{aligned}
\tag{5}
$$

Matrices A00(00), A00(01), A00(10), and A00(11) may be referred to as fractional matrices of A00, and B00(00), B00(01), B00(10), and B00(11) may be referred to as fractional matrices of B00. Correspondingly, the matrix C00 may include C00(00), C00(01), C00(10), and C00(11).

In this embodiment of this application, that one matrix multiplication operation result is obtained by performing a matrix multiplication operation on one first fractional signal matrix and one first fractional weight matrix corresponding to the first fractional signal matrix includes: dividing the first fractional signal matrix to obtain a plurality of second fractional signal matrices of x rows and h columns; dividing the first fractional weight matrix to obtain a plurality of second fractional weight matrices of h rows and y columns, where neither the second fractional signal matrices nor the second fractional weight matrices approximate to a square shape; and performing matrix multiplication and accumulation operation on the plurality of second fractional signal matrices and the plurality of second fractional weight matrices, to obtain a plurality of matrix operation results. Optionally, $|x - h| \geq 2$, and $|h - y| \geq 2$.

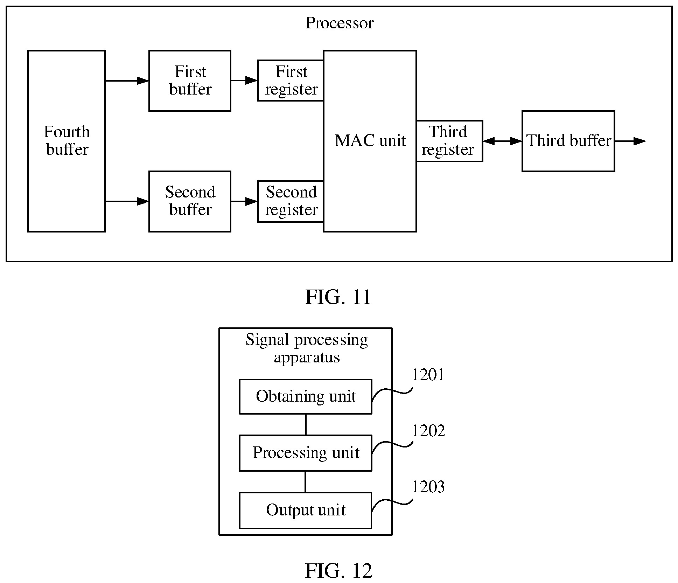

With reference to FIG. 10, referring to FIG. 11, when the processor further includes a first register, a second register, and a third register, the processor may interact with the first buffer by using the first register, interact with the second buffer by using the second register, and interact with the third buffer by using the third register. The first register may be configured to store a second fractional signal matrix. In other words, the first register is configured to store a smallest fractional signal matrix, for example, configured to store A00(00), A00(01), A00(10), or A00(11) in FIG. 8. The second register is configured to store a second fractional weight matrix. In other words, the second register is configured to store a smallest fractional weight matrix, for example, configured to store B00(00), B00(01), B00(10), or B00(11) in FIG. 8. The third register is configured to store a matrix multiplication operation result or accumulation of at least two matrix multiplication operation results that are obtained in a process in which a matrix multiplication operation is performed on a plurality of second fractional signal matrices and a plurality of second fractional weight matrices, for example, configured to store A00(00)B00(00) or A00(00)B00(01) in FIG. 8.

Specifically, when the MAC unit performs a matrix multiplication operation, a first fractional signal matrix read by the MAC unit is stored in the first buffer, and a read first fractional weight matrix is stored in the second buffer. The MAC unit reads a second fractional signal matrix of x rows and h columns from the first buffer by using the first register, and reads a second fractional weight matrix of x rows and h columns from the second buffer by using the second register. The MAC unit stores a matrix multiplication result or accumulation of at least two matrix multiplication results that are obtained in a process in which a matrix multiplication operation is performed on the plurality of second fractional signal matrices and the plurality of second fractional weight matrices into the third buffer by using the third register, and/or reads the matrix multiplication result and the accumulation of at least two matrix multiplication results from the third buffer.

Correspondingly, when matrix multiplication and accumulation operation is performed on the plurality of second fractional signal matrices and the plurality of second fractional weight matrices, x is positively related to second read/write power consumption of the first buffer, y is positively related to second read/write power consumption of the second buffer, and h is negatively related to each of the second read/write power consumption of the first buffer and that of the second buffer. In addition, x and y each are negatively related to the read/write power consumption of the third buffer, and h is positively related to the read/write power consumption of the third buffer. Analysis on a relationship between x, h, y and read/write power consumption of different buffers is similar to analysis on a relationship between X, H, Y and read/write power consumption of different buffers. For details, refer to the foregoing descriptions. Details are not described in this embodiment of this application again.

It should be noted that the second read/write power consumption of the first buffer herein includes power consumption for writing a first fractional signal matrix to the first buffer, and power consumption for reading a second fractional signal matrix from the first buffer by using the first register. The second read/write power consumption of the second buffer includes power consumption for writing a first fractional weight matrix to the second buffer, and power consumption for reading a second fractional weight matrix from the second buffer by using the second register. The read/write power consumption of the third buffer includes power consumption for writing a matrix multiplication operation result or accumulation of at least two matrix multiplication operation results into the third buffer, and power consumption for reading the matrix multiplication operation result or the accumulation of at least two matrix multiplication operation results from the third buffer by using the third register.

In conclusion, the first fractional signal matrix and the first fractional weight matrix are used as an example. If the capacity of the first buffer is equal to the capacity of the second buffer (that is, X=Y, and X x H = H x Y = constants), a relationship between total power consumption of the MAC unit and a row quantity and a column quantity of the signal matrix, a row quantity and a column quantity of the weight matrix, and a row quantity X of the first fractional signal matrix may be represented by using the following formula (6):

$$E(X) = G_1(M, N, K)X + G_2(M, N, K)/X + G_3(M, N, K) \quad (6)$$

X is independent variable. M and K are respectively the row quantity and the column quantity of the signal matrix, and K and N are respectively the row quantity and the column quantity of the weight matrix. G1, G2, and G3 are

13

sub-functions related to M, N, and K.

Further, when the signal matrix and the weight matrix are divided, a corresponding X may be determined based on a lowest-power consumption principle, and correspondingly, Y and H are determined, so that the plurality of first fractional signal matrices and the plurality of first fractional weight matrices are obtained. When matrix multiplication and accumulation operation is performed, an optimal design of power consumption of the processor may be implemented. Because power consumption parameters of different devices are different, optimal design of power consumption for X, Y, and Z may be performed through combination with understanding of performance parameters of a buffer and an actual test. This specifically depends on an actual application scenario and component selection, and is not further described in this embodiment.

In actual application, a row quantity and a column quantity of a first fractional signal matrix and a row quantity and a column quantity of a first fractional weight matrix may also be determined based on capacities of different buffers, power consumption of a processor, bandwidths of different buffers, and the like. Therefore, when an output matrix is determined based on a plurality of first fractional signal matrices and a plurality of first fractional weight matrices, capacities and bandwidths of different buffers may be fully used, and power consumption of the processor is minimized. According to the descriptions of the foregoing embodiment, there is a specific relationship between system power consumption and various parameters such as a row quantity of a matrix, a column quantity of a matrix, a quantity of times for reading and writing of each buffer, or performance of each buffer. To optimize power consumption, a read/write configuration parameter of each buffer needs to be flexibly adjusted, to reduce power consumption. To adapt to this flexible configuration, a related method and apparatus are designed in this embodiment. Calculation is performed on a fractional signal matrix and a fractional weight matrix that meet a non-approximate square, and the fractional signal matrix and the fractional weight matrix are not strictly limited to a square, so that design flexibility is improved to adapt to different read/write requirements on the buffer.

The foregoing mainly describes, from a perspective of a device, the signal processing method provided in the embodiments of this application. It may be understood that, to implement the foregoing functions, the device includes a corresponding hardware structure and/or a software module for executing the functions. A person of ordinary skill in the art should easily be aware that, in combination with the examples described in the embodiments disclosed in this specification, network elements and algorithms steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function modules of a data processing apparatus may be divided based on the foregoing method examples. For example, each function module may be obtained through division based on a corresponding function, or two or more functions may be integrated into one processing module. The integrated module may be implemented in a form of hardware, or may be implemented in a form of a software function module. It should be noted that module division in the embodiments of this application is an example, and is merely logical function division. In actual implementation, there may be another division manner.

When each function module is obtained through division based on a corresponding function, FIG. 12 is a possible schematic structural diagram of the signal processing apparatus in the foregoing embodiment. The signal processing apparatus includes: an obtaining unit 1201, a processing unit 1202, and an output unit 1203. The obtaining unit 1201 is configured to support the signal processing apparatus to perform step 701 in FIG. 7. The processing unit 1202 is configured to support the signal processing apparatus to perform step 702 and step 703 in FIG. 7, and/or is configured to perform another process of the technology described in this specification. The output unit 1203 is configured to support the signal processing apparatus to perform step 704 in FIG. 7.

The foregoing describes the signal processing apparatus in this embodiment of this application from a perspective of a modular functional entity, and the following describes the signal processing apparatus in this embodiment of this application from a perspective of hardware processing of a processor.

An embodiment of this application provides a signal processing apparatus. A structure of the device may be shown in FIG 2, and the signal processing apparatus includes a memory 201, a processor 202, a communications interface 203, and a bus 204. The communications interface 203 may include an input interface 2031 and an output interface 2032.

The input interface 2031 is configured to obtain a signal matrix and/or a weight matrix, and may implement switching between obtaining the signal matrix and obtaining the weight matrix by using a selector. In some feasible embodiments, the input interface may obtain the signal matrix or the weight matrix in a time division multiplexing manner. In some feasible embodiments, there may be two input interfaces to respectively obtain the signal matrix and the weight matrix, for example, simultaneously obtain the signal matrix and the weight matrix.

The Processor 202 is configured to process functions of step 702 and step 703 in the foregoing signal processing method. In some feasible embodiments, the processor may be a uni-processor structure, a multiprocessor structure, a single-thread processor, a multi-threaded processor, or the like. In some feasible embodiments, the processor may be integrated into an application-specific integrated circuit, or may be a processor chip independent of an integrated circuit.

The output interface 2032 is configured to output a signal processing result of the foregoing signal processing method. In some feasible embodiments, the signal processing result may be directly output by the processor, or may be first stored in the memory and then output by the memory. In some feasible embodiments, there may be only one output interface, or there may be a plurality of output interfaces. In some feasible embodiments, the signal processing result output by the output interface may be sent to the memory for storage, or may be sent to a next signal processing apparatus for further processing, or may be sent to a display device for display, or sent to a player terminal for play, or the like.

The memory 201 may store the signal matrix, the signal processing result, the weight matrix, a related instruction for configuring the processor, and the like. In some feasible embodiments, there may be one memory, or there may be a plurality of memories. The memory may be a floppy disk, a hard disk such as a built-in hard disk or a removable hard disk, a magnetic disk, a compact disc, a magneto-optical disk such as a CD_ROM or a DCD_ROM, or a nonvolatile storage device such as a RAM, a ROM, a PROM, an EPROM, an EEPROM, a flash memory, or any other form of storage medium known in the art.

Components of the foregoing signal processing apparatus provided in this embodiment of this application are respectively configured to implement functions of the steps of the foregoing corresponding signal processing method. The steps are described in detail in the foregoing signal processing method embodiment, and details are not described herein again.

An embodiment of this application further provides a computer readable storage medium. The computer readable storage medium stores an instruction, and when the instruction is run on a device (for example, the device may be a single-chip microcomputer, a chip, or a computer), the device is enabled to perform one or more steps in step 701 to step 704 of the foregoing signal processing method. When an integrated module of the signal processing apparatus is implemented in a form of a software functional unit and sold or used as an independent product, the integrated module may be stored in a computer readable storage medium.

Based on such an understanding, an embodiment of this application further provides a computer program product. The technical solutions of the embodiments of this application are essentially, or partially contributed to the prior art, or all or some of the technical solutions may be implemented in a form of a software product. The computer software product is stored in a storage medium and includes several instructions for instructing a computer device (which may be a personal computer, a server, or a network device) or a processor in the computer device to perform all or some of the steps of the method described in the embodiments of this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A signal processing method, wherein the signal processing method is for processing input signals such as a speech signal, a text signal, an image signal or a temperature signal in a convolutional neural network, CNN, and is applied to a device comprising a processor (202), wherein the processor performs a convolution operation in which convolution of an input signal feature and a weight is converted into a matrix multiplication operation between a signal matrix and a weight matrix, and the method comprises:

   obtaining (701) a signal matrix and a weight matrix, wherein the signal matrix may come from an input layer or an intermediate layer of the convolutional neural network and is a two-dimensional matrix and comprises a plurality of signals that are capable of being processed by a computer, the weight matrix is a two-dimensional matrix and comprises a plurality of weight coefficients, and a number of columns of the signal matrix is equal to a number of rows of the weight matrix such that the matrices can be multiplied;
   dividing (702) the signal matrix to obtain a plurality of first fractional signal matrices of X rows and H columns, and dividing the weight matrix to obtain a plurality of first fractional weight matrices of H rows and Y columns, wherein neither the first fractional signal matrices nor the first fractional weight matrices approximate to a square shape such that the first fractional signal matrices and the first fractional weight matrices are rectangular matrices; and
   performing (703) matrix multiplication and accumulation operation on the plurality of first fractional signal matrices and the plurality of first fractional weight matrices, to obtain a plurality of matrix operation results, wherein the plurality of matrix operation results are used to form a signal processing result, each matrix operation result comprises accumulation of a plurality of matrix multiplication results, and each matrix multiplication result is obtained by performing a matrix multiplication operation on one first fractional signal matrix and one first fractional weight matrix.

2. The signal processing method according to claim 1, wherein that a matrix does not approximate to a square shape comprises: an absolute value of a difference between a row quantity and a column quantity of the matrix is greater than or equal to 2.

3. The signal processing method according to claim 1 or 2, wherein the processor comprises a first buffer and a second buffer, and the dividing the signal matrix to obtain a plurality of first fractional signal matrices of X rows and H columns, and dividing the weight matrix to obtain a plurality of first fractional weight matrices of H rows and Y columns comprises:

reading the plurality of first fractional signal matrices of X rows and H columns from the signal matrix for a plurality of times by using the first buffer; and
reading the plurality of first fractional weight matrices of H rows and Y columns from the weight matrix for a plurality of times by using the second buffer.

4. The signal processing method according to any one of claims 1 to 3, wherein the processor further comprises a third buffer, and the method further comprises:
writing the matrix multiplication result or accumulation of at least two matrix multiplication results into the third buffer.

5. The signal processing method according to any one of claims 1 to 4, wherein that a matrix multiplication operation is performed on one first fractional signal matrix and one first fractional weight matrix to obtain one matrix multiplication result comprises:

dividing the first fractional signal matrix to obtain a plurality of second fractional signal matrices of x rows and h columns, and dividing the first fractional weight matrix to obtain a plurality of second fractional weight matrices of h rows and y columns, wherein neither the second fractional signal matrices nor the second fractional weight matrices approximate to a square shape; and
performing matrix multiplication and accumulation operation on the plurality of second fractional signal matrices and the plurality of second fractional weight matrices, to obtain a plurality of matrix operation results.

6. A signal processing apparatus (202), wherein the signal processing apparatus (202) is processing input signals such as a speech signal, a text signal, an image signal or a temperature signal in a convolutional neural network, performs a convolution operation in which convolution of an input signal feature and a weight is converted into a matrix multiplication operation between a signal matrix and a weight matrix, and comprises:

an obtaining unit (1201), configured to obtain a signal matrix and a weight matrix, wherein the signal matrix may come from an input layer or an intermediate layer of the convolutional neural network and is a two-dimensional matrix and comprises a plurality of signals that are capable of being processed by a computer, the weight matrix is a two-dimensional matrix and comprises a plurality of weight coefficients, and a number of columns of the signal matrix is equal to a number of rows of the weight matrix such that the matrices can be multiplied; and
a processing unit (1202), configured to: divide the signal matrix to obtain a plurality of first fractional signal matrices of X rows and H columns; divide the weight matrix to obtain a plurality of first fractional weight matrices of H rows and Y columns, wherein neither the first fractional signal matrices nor the first fractional weight matrices approximate to a square shape such that the first fractional signal matrices and the first fractional weight matrices are rectangular matrices; and perform matrix multiplication and accumulation operation on the plurality of first fractional signal matrices and the plurality of first fractional weight matrices, to obtain a plurality of matrix operation results, wherein the plurality of matrix operation results are used to form a signal processing result, each matrix operation result comprises accumulation of a plurality of matrix multiplication results, and each matrix multiplication result is obtained by performing a matrix multiplication operation on one first fractional signal matrix and one first fractional weight matrix.

7. The signal processing apparatus according to claim 6, wherein that a matrix does not approximate to a square shape comprises: an absolute value of a difference between a row quantity and a column quantity of the matrix is greater than or equal to 2.

8. The signal processing apparatus according to claim 6 or 7, wherein the processing unit comprises a first buffer and a second buffer, and the processing unit is further configured to:

   read the plurality of first fractional signal matrices of X rows and H columns from the signal matrix for a plurality of times by using the first buffer; and
   read the plurality of first fractional weight matrices of H rows and Y columns from the weight matrix for a plurality of times by using the second buffer.

9. The signal processing apparatus according to any one of claims 6 to 8, wherein the processing unit further comprises a third buffer, and the processing unit is further configured to:
   write the matrix multiplication result or accumulation of at least two matrix multiplication results into the third buffer.

10. The signal processing apparatus according to any one of claims 6 to 9, for performing a matrix multiplication operation on one first fractional signal matrix and one first fractional weight matrix, the processing unit is further configured to:

   divide the first fractional signal matrix to obtain a plurality of second fractional signal matrices of x rows and h columns, and divide the first fractional weight matrix to obtain a plurality of second fractional weight matrices of h rows and y columns, wherein neither the second fractional signal matrices nor the second fractional weight matrices approximate to a square shape; and
   perform matrix multiplication and accumulation operation on the plurality of second fractional signal matrices and the plurality of second fractional weight matrices, to obtain a plurality of matrix operation results.

11. A readable storage medium, wherein the readable storage medium stores an instruction, and when the instruction is run on a device, the device is enabled to perform the signal processing method according to any one of claims 1 to 5.

12. A computer program product, wherein when the computer program product is run on a computer, the computer is enabled to perform the signal processing method according to any one of claims 1 to 5.

**Patentansprüche**

1. Signalverarbeitungsverfahren, wobei das Signalverarbeitungsverfahren zur Verarbeitung von Eingangssignalen, wie z. B. einem Sprachsignal, einem Textsignal, einem Bildsignal oder einem Temperatursignal, in einem faltenden neuronalen Netzwerk (Convolutional Neural Network = CNN) dient und auf eine Vorrichtung mit einem Prozessor (202) angewendet wird,
   wobei der Prozessor eine Faltungsoperation durchführt, bei der die Faltung eines Eingangssignalmerkmals und einer Gewichtung in eine Matrixmultiplikationsoperation zwischen einer Signalmatrix und einer Gewichtungsmatrix umgewandelt wird, und das Verfahren Folgendes umfasst:

   Erhalten (701) einer Signalmatrix und einer Gewichtungsmatrix, wobei die Signalmatrix von einer Eingabeschicht oder einer Zwischenschicht des faltenden neuronalen Netzwerks kommen kann und eine zweidimensionale Matrix ist und eine Vielzahl von Signalen umfasst, die von einem Computer verarbeitet werden können, die Gewichtungsmatrix eine zweidimensionale Matrix ist und eine Vielzahl von Gewichtungskoeffizienten umfasst, und eine Anzahl von Spalten der Signalmatrix gleich einer Anzahl von Zeilen der Gewichtungsmatrix ist, so dass die Matrizen multipliziert werden können;
   Dividieren (702) der Signalmatrix, um eine Vielzahl von ersten fraktionalen Signalmatrizen mit X Zeilen und H Spalten zu erhalten, und Dividieren der Gewichtungsmatrix, um eine Vielzahl von ersten fraktionalen Gewichtungsmatrizen mit H Zeilen und Y Spalten zu erhalten,
   wobei weder die ersten fraktionalen Signalmatrizen noch die ersten fraktionalen Gewichtungsmatrizen sich einer quadratischen Form annähern, so dass die ersten fraktionalen Signalmatrizen und die ersten fraktionalen Gewichtungsmatrizen rechteckige Matrizen sind; und
   Durchführen (703) einer Matrixmultiplikation und einer Akkumulationsoperation an der Vielzahl von ersten fraktionalen Signalmatrizen und der Vielzahl von ersten fraktionalen Gewichtungsmatrizen, um eine Vielzahl von Matrixoperationsergebnissen zu erhalten,
   wobei die Vielzahl von Matrixoperationsergebnissen verwendet wird, um ein Signalverarbeitungsergebnis zu bilden, jedes Matrixoperationsergebnis die Akkumulation einer Vielzahl von Matrixmultiplikationsergebnissen umfasst, und jedes Matrixmultiplikationsergebnis durch Ausführen einer Matrixmultiplikationsoperation an einer ersten fraktionalen Signalmatrix und einer ersten fraktionalen Gewichtungsmatrix erhalten wird.

**2.** Signalverarbeitungsverfahren gemäß Anspruch 1, wobei die Tatsache, dass sich eine Matrix nicht einer quadratischen Form annähert, Folgendes umfasst:

ein Absolutwert einer Differenz zwischen einer Zeilenmenge und einer Spaltenmenge der Matrix ist größer oder gleich 2.

**3.** Signalverarbeitungsverfahren gemäß Anspruch 1 oder 2, wobei der Prozessor einen ersten Puffer und einen zweiten Puffer umfasst, und das Dividieren der Signalmatrix, um eine Vielzahl von ersten fraktionalen Signalmatrizen mit X Zeilen und H Spalten zu erhalten, und das Dividieren der Gewichtungsmatrix, um eine Vielzahl von ersten fraktionalen Gewichtungsmatrizen mit H Zeilen und Y Spalten zu erhalten, Folgendes umfasst:

Lesen der Vielzahl von ersten fraktionalen Signalmatrizen mit X Zeilen und H Spalten aus der Signalmatrix für eine Vielzahl von Malen unter Verwendung des ersten Puffers; und
Lesen der Vielzahl von ersten fraktionalen Gewichtungsmatrizen mit H Zeilen und Y Spalten aus der Gewichtungsmatrix für eine Vielzahl von Malen unter Verwendung des zweiten Puffers.

**4.** Signalverarbeitungsverfahren gemäß einem der Ansprüche 1 bis 3, wobei der Prozessor ferner einen dritten Puffer umfasst, und das Verfahren ferner Folgendes umfasst:

Schreiben des Matrixmultiplikationsergebnisses oder der Akkumulation von mindestens zwei Matrixmultiplikationsergebnissen in den dritten Puffer.

**5.** Signalverarbeitungsverfahren gemäß einem der Ansprüche 1 bis 4, wobei die Tatsache, dass eine Matrixmultiplikationsoperation an einer ersten fraktionalen Signalmatrix und einer ersten fraktionalen Gewichtungsmatrix durchgeführt wird, um ein Matrixmultiplikationsergebnis zu erhalten, Folgendes umfasst:

Dividieren der ersten fraktionalen Signalmatrix, um eine Vielzahl von zweiten fraktionalen Signalmatrizen mit x Zeilen und h Spalten zu erhalten, und Dividieren der ersten fraktionalen Gewichtungsmatrix, um eine Vielzahl von zweiten fraktionalen Gewichtungsmatrizen mit h Zeilen und y Spalten zu erhalten,
wobei weder die zweiten fraktionalen Signalmatrizen noch die zweiten fraktionalen Gewichtungsmatrizen sich einer quadratischen Form annähern; und
Durchführen einer Matrixmultiplikation und einer Akkumulationsoperation an der Vielzahl von zweiten fraktionalen Signalmatrizen und der Vielzahl von zweiten fraktionalen Gewichtungsmatrizen, um eine Vielzahl von Matrixoperationsergebnissen zu erhalten.

**6.** Signalverarbeitungsvorrichtung (202), wobei die Signalverarbeitungsvorrichtung (202) Eingangssignale, wie z. B. ein Sprachsignal, ein Textsignal, ein Bildsignal oder ein Temperatursignal, in einem faltenden neuronalen Netzwerk verarbeitet, eine Faltungsoperation durchführt, bei der die Faltung eines Eingangssignalmerkmals und einer Gewichtung in eine Matrixmultiplikationsoperation zwischen einer Signalmatrix und einer Gewichtungsmatrix umgewandelt wird, und Folgendes umfasst:

eine Erhaltungseinheit (1201), die so ausgebildet ist, dass sie eine Signalmatrix und eine Gewichtungsmatrix erhält,
wobei die Signalmatrix von einer Eingangsschicht oder einer Zwischenschicht des faltenden neuronalen Netzwerks stammen kann und eine zweidimensionale Matrix ist und eine Vielzahl von Signalen umfasst, die von einem Computer verarbeitet werden können, die Gewichtungsmatrix eine zweidimensionale Matrix ist und eine Vielzahl von Gewichtungskoeffizienten umfasst und eine Anzahl von Spalten der Signalmatrix gleich einer Anzahl von Zeilen der Gewichtungsmatrix ist, so dass die Matrizen multipliziert werden können; und
eine Verarbeitungseinheit (1202), die für Folgendes ausgebildet ist:

Dividieren der Signalmatrix, um eine Vielzahl von ersten fraktionalen Signalmatrizen mit X Zeilen und H Spalten zu erhalten;
Dividieren der Gewichtungsmatrix, um eine Vielzahl von ersten fraktionalen Gewichtungsmatrizen mit H Zeilen und Y Spalten zu erhalten,
wobei weder die ersten fraktionalen Signalmatrizen noch die ersten fraktionalen Gewichtungsmatrizen sich einer quadratischen Form annähern, so dass die ersten fraktionalen Signalmatrizen und die ersten fraktionalen Gewichtungsmatrizen rechteckige Matrizen sind; und
Durchführen einer Matrixmultiplikation und einer Akkumulationsoperation an der Vielzahl von ersten fraktionalen Signalmatrizen und der Vielzahl von ersten fraktionalen Gewichtungsmatrizen, um eine Vielzahl von Matrixoperationsergebnissen zu erhalten,

wobei die Vielzahl von Matrixoperationsergebnissen verwendet wird, um ein Signalverarbeitungsergebnis zu bilden, jedes Matrixoperationsergebnis die Akkumulation einer Vielzahl von Matrixmultiplikationsergebnissen umfasst, und jedes Matrixmultiplikationsergebnis durch Ausführen einer Matrixmultiplikationsoperation an einer ersten fraktionalen Signalmatrix und einer ersten fraktionalen Gewichtungsmatrix erhalten wird.

7. Signalverarbeitungsvorrichtung gemäß Anspruch 6, wobei die Tatsache, dass sich eine Matrix nicht einer quadratischen Form annähert, Folgendes umfasst:
ein Absolutwert einer Differenz zwischen einer Zeilenmenge und einer Spaltenmenge der Matrix ist größer oder gleich 2.

8. Signalverarbeitungsvorrichtung gemäß Anspruch 6 oder 7, wobei die Verarbeitungseinheit einen ersten Puffer und einen zweiten Puffer umfasst, und die Verarbeitungseinheit ferner für Folgendes ausgebildet ist:

Lesen der Vielzahl von ersten fraktionalen Signalmatrizen mit X Zeilen und H Spalten aus der Signalmatrix für eine Vielzahl von Malen unter Verwendung des ersten Puffers; und
Lesen der Vielzahl von ersten fraktionalen Gewichtungsmatrizen mit H Zeilen und Y Spalten aus der Gewichtungsmatrix für eine Vielzahl von Malen unter Verwendung des zweiten Puffers.

9. Signalverarbeitungsvorrichtung gemäß einem der Ansprüche 6 bis 8, wobei die Verarbeitungseinheit ferner einen dritten Puffer umfasst und die Verarbeitungseinheit ferner für Folgendes ausgebildet ist:
Schreiben des Matrixmultiplikationsergebnisses oder der Akkumulation von mindestens zwei Matrixmultiplikationsergebnissen in den dritten Puffer.

10. Signalverarbeitungsvorrichtung gemäß einem der Ansprüche 6 bis 9 zur Durchführung einer Matrixmultiplikationsoperation an einer ersten fraktionalen Signalmatrix und einer ersten fraktionalen Gewichtungsmatrix, wobei die Verarbeitungseinheit ferner für Folgendes ausgebildet ist:

Dividieren der ersten fraktionalen Signalmatrix, um eine Vielzahl von zweiten fraktionalen Signalmatrizen mit x Zeilen und h Spalten zu erhalten, und Dividieren der ersten fraktionalen Gewichtungsmatrix, um eine Vielzahl von zweiten fraktionalen Gewichtungsmatrizen mit h Zeilen und y Spalten zu erhalten,
wobei weder die zweiten fraktionalen Signalmatrizen noch die zweiten fraktionalen Gewichtungsmatrizen sich einer quadratischen Form annähern; und
Durchführen einer Matrixmultiplikation und einer Akkumulationsoperation an der Vielzahl von zweiten fraktionalen Signalmatrizen und der Vielzahl von zweiten fraktionalen Gewichtungsmatrizen, um eine Vielzahl von Matrixoperationsergebnissen zu erhalten.

11. Lesbares Speichermedium, wobei das lesbare Speichermedium eine Anweisung speichert, und wenn die Anweisung auf einer Vorrichtung ausgeführt wird, die Vorrichtung in die Lage versetzt wird, das Signalverarbeitungsverfahren gemäß einem der Ansprüche 1 bis 5 durchzuführen.

12. Computerprogrammprodukt, wobei, wenn das Computerprogrammprodukt auf einem Computer ausgeführt wird, der Computer befähigt wird, das Signalverarbeitungsverfahren gemäß einem der Ansprüche 1 bis 5 durchzuführen.

**Revendications**

1. Procédé de traitement de signaux, le procédé de traitement de signaux étant destiné à traiter des signaux d'entrée tels qu'un signal vocal, un signal de texte, un signal d'image ou un signal de température dans un réseau neuronal convolutif, CNN, et étant appliqué à un dispositif comprenant un processeur (202), dans lequel le processeur effectue une opération de convolution dans laquelle la convolution d'une caractéristique de signal d'entrée et d'un poids est convertie en une opération de multiplication matricielle entre une matrice de signaux et une matrice de poids, et le procédé comprenant :

obtenir (701) une matrice de signaux et une matrice de poids, dans lequel la matrice de signaux peut provenir d'une couche d'entrée ou d'une couche intermédiaire du réseau neuronal convolutif et est une matrice bidimensionnelle et comprend une pluralité de signaux qui peuvent être traités par un ordinateur, la matrice de poids est une matrice bidimensionnelle et comprend une pluralité de coefficients de poids, et un nombre de colonnes de la matrice de signaux est égal à un nombre de lignes de la matrice de poids de sorte que les matrices peuvent être multipliées ;

diviser (702) la matrice de signaux pour obtenir une pluralité de premières matrices de signaux fractionnaires de X lignes et H colonnes, et diviser la matrice de poids pour obtenir une pluralité de premières matrices de poids fractionnaires de H lignes et Y colonnes, dans lequel ni les premières matrices de signaux fractionnaires ni les premières matrices de poids fractionnaires ne s'approchent d'une forme carrée de sorte que les premières matrices de signaux fractionnaires et les premières matrices de poids fractionnaires sont des matrices rectangulaires ; et

effectuer (703) une opération de multiplication matricielle et de cumul sur la pluralité de premières matrices de signaux fractionnaires et la pluralité de premières matrices de poids fractionnaires, pour obtenir une pluralité de résultats d'opération matricielle, dans lequel la pluralité de résultats d'opération matricielle sont utilisés pour former un résultat de traitement de signaux, chaque résultat d'opération matricielle comprend le cumul d'une pluralité de résultats de multiplication matricielle, et chaque résultat de multiplication matricielle est obtenu en effectuant une opération de multiplication matricielle sur une première matrice de signaux fractionnaire et une première matrice de poids fractionnaire.

2. Procédé de traitement de signaux selon la revendication 1, dans lequel le fait qu'une matrice ne s'approche pas d'une forme carrée comprend le fait que : une valeur absolue d'une différence entre une quantité de lignes et une quantité de colonnes de la matrice est supérieure ou égale à 2.

3. Procédé de traitement de signaux selon la revendication 1 ou 2, dans lequel le processeur comprend un premier tampon et un deuxième tampon, et la division de la matrice de signaux pour obtenir une pluralité de premières matrices de signaux fractionnaires de X lignes et H colonnes, et la division de la matrice de poids pour obtenir une pluralité de premières matrices de poids fractionnaires de H lignes et Y colonnes comprend :

lire la pluralité de premières matrices de signaux fractionnaires de X lignes et H colonnes à partir de la matrice de signaux une pluralité de fois en utilisant le premier tampon ; et

lire la pluralité de premières matrices de poids fractionnaires de H lignes et Y colonnes à partir de la matrice de poids une pluralité de fois en utilisant le deuxième tampon.

4. Procédé de traitement de signaux selon l'une quelconque des revendications 1 à 3, le processeur comprenant en outre un troisième tampon, et le procédé comprenant en outre :
écrire le résultat de multiplication matricielle ou le cumul d'au moins deux résultats de multiplication matricielle dans le troisième tampon.

5. Procédé de traitement de signaux selon l'une quelconque des revendications 1 à 4, dans lequel le fait qu'une opération de multiplication matricielle soit effectuée sur une première matrice de signaux fractionnaire et une première matrice de poids fractionnaire pour obtenir un résultat de multiplication matricielle comprend :

diviser la première matrice de signaux fractionnaire pour obtenir une pluralité de deuxièmes matrices de signaux fractionnaires de x lignes et h colonnes, et diviser la première matrice de poids fractionnaire pour obtenir une pluralité de deuxièmes matrices de poids fractionnaires de h lignes et y colonnes, dans lequel ni les deuxièmes matrices de signaux fractionnaires ni les deuxièmes matrices de poids fractionnaires ne s'approchent d'une forme carrée ; et

effectuer une opération de multiplication matricielle et de cumul sur la pluralité de deuxièmes matrices de signaux fractionnaires et la pluralité de deuxièmes matrices de poids fractionnaires, pour obtenir une pluralité de résultats d'opération matricielle.

6. Appareil de traitement de signaux (202), l'appareil de traitement de signaux (202) traitant des signaux d'entrée tels qu'un signal vocal, un signal de texte, un signal d'image ou un signal de température dans un réseau neuronal convolutif, effectuant une opération de convolution dans laquelle la convolution d'une caractéristique de signal d'entrée et d'un poids est convertie en une opération de multiplication matricielle entre une matrice de signaux et une matrice de poids, et comprenant :

une unité d'obtention (1201), configurée pour obtenir une matrice de signaux et une matrice de poids, dans lequel la matrice de signaux peut provenir d'une couche d'entrée ou d'une couche intermédiaire du réseau neuronal convolutif et est une matrice bidimensionnelle et comprend une pluralité de signaux qui peuvent être traités par un ordinateur, la matrice de poids est une matrice bidimensionnelle et comprend une pluralité de coefficients de poids, et un nombre de colonnes de la matrice de signaux est égal à un nombre de lignes de la matrice de poids de sorte que les matrices peuvent être multipliées ; et

une unité de traitement (1202), configurée pour : diviser la matrice de signaux pour obtenir une pluralité de premières matrices de signaux fractionnaires de X lignes et H colonnes ; diviser la matrice de poids pour obtenir une pluralité de premières matrices de poids fractionnaires de H lignes et Y colonnes, dans lequel ni les premières matrices de signaux fractionnaires ni les premières matrices de poids fractionnaires ne s'approchent d'une forme carrée de sorte que les premières matrices de signaux fractionnaires et les premières matrices de poids fractionnaires sont des matrices rectangulaires ; et effectuer une opération de multiplication matricielle et de cumul sur la pluralité de premières matrices de signaux fractionnaires et la pluralité de premières matrices de poids fractionnaires, pour obtenir une pluralité de résultats d'opération matricielle, dans lequel la pluralité de résultats d'opération matricielle sont utilisés pour former un résultat de traitement de signaux, chaque résultat d'opération matricielle comprend le cumul d'une pluralité de résultats de multiplication matricielle, et chaque résultat de multiplication matricielle est obtenu en effectuant une opération de multiplication matricielle sur une première matrice de signaux fractionnaire et une première matrice de poids fractionnaire.

7. Appareil de traitement de signaux selon la revendication 6, dans lequel le fait qu'une matrice ne s'approche pas d'une forme carrée comprend le fait que : une valeur absolue d'une différence entre une quantité de lignes et une quantité de colonnes de la matrice est supérieure ou égale à 2.

8. Appareil de traitement de signaux selon la revendication 6 ou 7, dans lequel l'unité de traitement comprend un premier tampon et un deuxième tampon, et l'unité de traitement est en outre configurée pour :

lire la pluralité de premières matrices de signaux fractionnaires de X lignes et H colonnes à partir de la matrice de signaux une pluralité de fois en utilisant le premier tampon ; et
lire la pluralité de premières matrices de poids fractionnaires de H lignes et Y colonnes à partir de la matrice de poids une pluralité de fois en utilisant le deuxième tampon.

9. Appareil de traitement de signaux selon l'une quelconque des revendications 6 à 8, dans lequel l'unité de traitement comprend en outre un troisième tampon, et l'unité de traitement est en outre configurée pour :
écrire le résultat de multiplication matricielle ou le cumul d'au moins deux résultats de multiplication matricielle dans le troisième tampon.

10. Appareil de traitement de signaux selon l'une quelconque des revendications 6 à 9, pour effectuer une opération de multiplication matricielle sur une première matrice de signaux fractionnaire et une première matrice de poids fractionnaire, l'unité de traitement est en outre configurée pour :

diviser la première matrice de signaux fractionnaire pour obtenir une pluralité de deuxièmes matrices de signaux fractionnaires de x lignes et h colonnes, et diviser la première matrice de poids fractionnaire pour obtenir une pluralité de deuxièmes matrices de poids fractionnaires de h lignes et y colonnes, dans lequel ni les deuxièmes matrices de signaux fractionnaires ni les deuxièmes matrices de poids fractionnaires ne s'approchent d'une forme carrée ; et
effectuer une opération de multiplication matricielle et de cumul sur la pluralité de deuxièmes matrices de signaux fractionnaires et la pluralité de deuxièmes matrices de poids fractionnaires, pour obtenir une pluralité de résultats d'opération matricielle.

11. Support de stockage lisible, le support de stockage lisible stockant une instruction, et lorsque l'instruction est exécutée sur un dispositif, le dispositif étant activé pour exécuter le procédé de traitement de signaux selon l'une quelconque des revendications 1 à 5.

12. Produit de programme informatique, lorsque le produit de programme informatique est exécuté sur un ordinateur, l'ordinateur étant activé pour exécuter le procédé de traitement de signaux selon l'une quelconque des revendications 1 à 5.

$$C = A \times B$$

| C00 | C01 |
|-----|-----|
| C10 | C11 |

=

| A00 | A01 |
|-----|-----|
| A10 | A11 |

x

| B00 | B01 |
|-----|-----|
| B10 | B11 |

FIG. 1

Device

Communications interface 203

Processor 202

204

Memory 201

FIG. 2

EP 3 663 938 B1

Input layer

Hidden layer

Output layer

$x_i$

Input signal

Layer 1

Layer 2

$f(x_i)$

Layer N–1

Layer N

$h_i$

Output signal

300

302

304

301

303

FIG. 3

FIG. 4

FIG. 5

Traditional convolution operation

Convolution operation after transformation

Input feature

| 14 | 20 |
| 15 | 24 |

| 12 | 24 |
| 17 | 26 |

Convolution kernel

| 1 | 1 |
| 2 | 2 |

| 1 | 1 |
| 1 | 1 |

| 0 | 1 |
| 1 | 0 |

| 1 | 0 |
| 0 | 1 |

| 2 | 1 |
| 2 | 1 |

| 1 | 2 |
| 2 | 0 |

Output feature

| 1 | 2 | 0 |
| 1 | 1 | 3 |
| 0 | 2 | 2 |

| 0 | 2 | 1 |
| 0 | 3 | 2 |
| 1 | 1 | 0 |

| 1 | 2 | 1 |
| 0 | 1 | 3 |
| 3 | 3 | 2 |

Input matrix feature

| 1 | 2 | 1 | 1 | 0 | 2 | 0 | 3 | 1 | 2 | 0 | 1 |
| 2 | 0 | 1 | 3 | 2 | 1 | 3 | 2 | 2 | 1 | 1 | 3 |
| 1 | 1 | 0 | 2 | 0 | 3 | 1 | 1 | 0 | 1 | 3 | 3 |
| 1 | 3 | 2 | 2 | 3 | 2 | 1 | 0 | 1 | 3 | 3 | 2 |

x

Core matrix

| 1 | 1 |
| 1 | 0 |
| 2 | 0 |
| 2 | 1 |
| 1 | 2 |
| 1 | 1 |
| 1 | 2 |
| 1 | 1 |
| 0 | 1 |
| 1 | 2 |
| 1 | 2 |
| 2 | 0 |

=

Output matrix feature

| 14 | 12 |
| 20 | 24 |
| 15 | 17 |
| 24 | 26 |

FIG. 6

25

```
┌────────────────────────────────────────────┐   701
│           Obtain a signal matrix and a       │  ⌐
│                 weight matrix                 │  ⌐_)
└────────────────────────────────────────────┘
                      │
                      ▼
┌────────────────────────────────────────────┐   702
│      Divide the signal matrix and the weight matrix to    │
│      obtain a plurality of first fractional signal matrices│  )
│      and a plurality of first fractional weight matrices that │
│           do not approximate to a square shape            │
└────────────────────────────────────────────┘
                      │
                      ▼
┌────────────────────────────────────────────┐   703
│  Perform a matrix multiplication and accumulation operation │
│      on the plurality of first fractional signal matrices and the │  )
│      plurality of first fractional weight matrices, to obtain a │
│      plurality of matrix operation results, where the plurality of │
│      matrix operation results are used to form a signal processing │
│                          result                          │
└────────────────────────────────────────────┘
                      │                             704
                      ▼                            )
┌────────────────────────────────────────────┐
│           Output the signal processing result             │
└────────────────────────────────────────────┘
```

FIG. 7

| C | | = | A | | x | B | |
|---|---|---|---|---|---|---|---|

⇓

| C00 | C01 |
|-----|-----|
| C10 | C11 |

=

| A00 | A01 |
|-----|-----|
| A10 | A11 |

x

| B00 | B01 |
|-----|-----|
| B10 | B11 |

⇓

C00

| C00(00) | C00(01) |
|---------|---------|
| C00(10) | C00(11) |

=

A00

| A00(00) | A00(01) |
|---------|---------|
| A00(10) | A00(11) |

x

B00

| B00(00) | B00(01) |
|---------|---------|
| B00(10) | B00(11) |

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016062947 A1

**Non-patent literature cited in the description**

- **SHARAN CHETLUR et al.** cuDNN: efficient primitives for deep learning. *arXiv:1410.0759v3,* 18 October 2014, arxiv.org/abs/1410.0759v3